# FASCICULE DE BREVET EUROPEEN

(11) **EP 0 649 980 B1**
(45) Date de publication et mention de la délivrance du brevet: **08.07.1998**
(21) Numéro de dépôt: 94402288.8
(22) Date de dépôt: 12.10.1994
(51) Int. Cl.: F02K 1/76

(54) **Inverseur de poussée à portes pour moteur d'avion à réaction équipées d'un volet auxiliaire**
Schubumkehreinrichtung eines Turbinenstrahltriebwerk mit Hilfklappen
Jet engine thrust reverser door equiped with an auxiliary flap

(30) Priorité: 22.10.1993 FR 9312605
(43) Date de publication de la demande: 26.04.1995
(73) Titulaire: SOCIETE DE CONSTRUCTION DES AVIONS HUREL-DUBOIS (société anonyme), F-92360 Meudon-La-Forêt (FR)
(72) Inventeur: Brusson, Jean-Pierre, F-92370 Chaville (FR); Jumel, Jean-Pierre, F-78360 Montesson (FR)
(74) Mandataire: Sauvage, Renée

(56) Documents cités:
- DE-A- 1 927 280
- FR-A- 2 635 825
- FR-A- 2 648 869
- GB-A- 1 177 864
- US-A- 3 576 337

## Description

La présente invention concerne les inverseurs de poussée dits "à portes basculantes" destinés à équiper des moteurs d'avions à réaction comportant un capotage entourant le groupe moteur et ménageant avec celui-ci un canal annulaire pour la circulation des gaz. Dans ce type d'inverseur, une série de portes articulées au capotage peut évoluer, sous l'action d'un vérin de commande, entre une position d'inversion de poussée dans laquelle les portes sont déployées de façon à dégager dans le capotage des ouvertures de dérivation des gaz tout en obturant au moins partiellement le canal annulaire, et une position de croisière dans laquelle les portes sont escamotées pour fermer les ouvertures de dérivation et constituer une partie du capotage.

Plus particulièrement, la présente invention vise un perfectionnement aux inverseurs tels que décrits dans FR-A-2 635 825 et dans FR-A-2 648 869.

Dans FR-A-2 635 825, les portes sont équipées, sur la partie amont de leur face interne, par référence au sens de circulation des gaz, d'au moins un volet auxiliaire articulé à l'intérieur de la porte et destiné, en position de croisière, à être écarté de la paroi interne de la porte pour s'aligner avec la surface externe du canal annulaire afin de permettre les meilleures conditions de circulation aérodynamique des gaz, alors qu'en position de porte déployée, ledit volet auxiliaire est rabattu contre la paroi interne de la porte, afin de permettre l'évacuation des gaz inversés, le déplacement du volet auxiliaire entre ces deux positions étant réalisé par un moyen de commande du volet coopérant, au moment de l'ouverture et de la fermeture de la porte, avec un système de butée porté par la partie fixe du capotage. Dans ce système connu, le volet auxiliaire est verrouillé lorsque la porte est en position escamotée alors qu'en position de porte déployée, il est ramené contre la porte par l'intermédiaire d'un moyen de rappel élastique de faible puissance. Ce système antérieur présente l'inconvénient de ne pas assurer un maintien suffisamment rigide du volet qui, sous l'effet des variations de pression dues au flux de gaz inversé, peut avoir tendance à vibrer, ce qui peut entraîner une détérioration du volet et/ou de la porte elle-même.

FR-A-2 648 869 décrit un système similaire, mais cette fois le moyen de commande du volet est constitué par un ensemble de biellettes comprenant une biellette, dite "première biellette, articulée à l'extrémité amont du volet. Dans ce système connu, lorsque la porte est en position escamotée, un galet porté en bout de ladite première biellette vient en prise avec une gouttière formant chemin de roulement fixée sur le cadre avant de la partie amont de l'inverseur tandis qu'en position de porte déployée, ce même galet se désolidarise d'avec la gouttière, et un verrou porté par la face interne du volet vient en prise, par blocage élastique, avec un logement ménagé sur la face du panneau interne de porte. Ce système antérieur présente l'inconvénient, de première part, de ne pas comporter de simple articulation à l'aval, avec pour conséquence des risques de vibration élevés et des problèmes d'accessibilité et de montage à l'intérieur de la porte, de deuxième part, d'utiliser un système de basculement du type "à galet coulissant dans un rail", système qui comporte des risques d'usure, de jeu, et donc de nouveau de fortes vibrations et, de troisième part, de nécessiter un système indépendant de verrouillage en position déployée, système qui, en l'occurrence, est très rudimentaire et peu sûr.

L'invention propose une solution simple permettant de remédier aux inconvénients des deux systèmes antérieurement connus et évoqués ci-dessus en assurant un maintien rigide du volet par rapport à la porte dans chacune de ses deux positions.

Pour ce faire, l'inverseur selon l'invention se distingue de FR-A- 2 648 869 par le fait que ladite première biellette est attelée par un axe d'articulation en bout d'une deuxième biellette articulée elle-même à son autre extrémité à l'intérieur de l'extrémité amont de la porte, une troisième biellette s'articulant à l'une de ses extrémités à l'axe d'articulation entre les première et seconde biellettes, tandis que son autre extrémité est articulée en bout d'une biellette d'actionnement articulée de façon pivotante autour d'un axe fixe de la porte, cette biellette d'actionnement assurant le déplacement de l'ensemble de biellettes par sa coopération avec le système de butée porté par la partie fixe du capotage, ledit ensemble de biellettes assurant un blocage du volet dans chacune des deux positions qu'il peut prendre, par dépassement, en bout de course, d'un point mort entre deux des biellettes consécutives de l'ensemble de biellettes.

Le dépassement de chacun des points morts entre les deux biellettes consécutives de l'ensemble de biellettes est limité par l'appui de la biellette d'actionnement contre des butées de limitation de course solidaires de la porte.

Le maintien du volet auxiliaire contre la paroi interne de la porte, lorsqu'elle est en position déployée, est assuré par le dépassement d'un point mort entre la biellette d'actionnement et ladite troisième biellette articulée à l'extrémité de ladite biellette d'actionnement.

A l'inverse, le maintien du volet auxiliaire dans sa position écartée de la paroi interne de porte, lorsque celle-ci est en position escamotée, est assuré par le dépassement d'un point mort entre lesdites première et deuxième biellettes articulées, pour l'une, à l'extrémité amont de la porte et, pour l'autre, au volet auxiliaire.

Selon une forme de réalisation de l'invention, la biellette d'actionnement comprend, de part et d'autre de son axe d'articulation à la porte, un premier bras articulé à ladite troisième biellette du jeu de biellettes et un second bras faisant saillie par rapport au bord amont de la porte et destiné à coopérer avec ledit système de butée, de telle sorte que, lors de l'ouverture ou de la fermeture de la porte, la coopération entre le système de butée et la biellette d'actionnement provoque le déplacement de celle-ci, déplacement assurant l'actionnement du jeu de biellettes.

Selon une deuxième forme de réalisation, la biellette d'actionnement, articulée sur ledit axe fixe de la porte, présente un bras attelé par une tringlerie à un doigt mobile articulé sur un axe fixe de la porte et ayant une extrémité libre faisant saillie par rapport au bord amont de la porte pour coopérer avec ledit système de butée, ladite tringlerie étant, d'une part, articulée de façon pivotante sur ledit bras de la biellette d'actionnement et, d'autre part, articulée de façon pivotante au doigt mobile en un point situé entre l'axe fixe de pivotement du doigt et l'extrémité libre en saillie de celui-ci, ladite tringlerie transmettant le mouvement du doigt à la biellette d'actionnement.

Le système de butée porté par la partie fixe du capotage et avec lequel coopère le moyen de commande du volet auxiliaire (et plus particulièrement la biellette d'actionnement) comporte une palette dont une partie s'étend en direction de la porte pour servir de butée d'arrêt à la partie du moyen de commande du volet faisant saillie par rapport au bord amont de la porte, ladite palette présentant, au-dessus de sa partie formant butée, un nez en saillie agissant lors de l'ouverture de porte sur la biellette d'actionnement du volet pour l'obliger à basculer.

Le nez en saillie est, de préférence, fixe par rapport à la palette. Il est avantageusement constitué par un loquet monté basculant sur un axe de la palette et sollicité par un ressort en position sortie au-dessus de la partie formant butée de la palette.

De préférence, l'extrémité libre du loquet a une forme concave terminée par un doigt d'appui, cette extrémité libre du loquet coopérant et restant en contact avec l'extrémité de la partie faisant saillie du moyen de commande du volet pendant l'ensemble des manoeuvres de début d'ouverture et de fin de fermeture de la porte.

La palette est avantageusement montée sur la partie fixe du capotage par l'intermédiaire d'un organe amortisseur élastique permettant un léger débattement de la palette.

L'ensemble de butée présente certains degrés de liberté afin de pouvoir absorber des jeux indispensables pour permettre les mouvements d'ouverture et de fermeture de la porte.

D'autres caractéristiques de l'invention apparaîtront dans le cours de la description suivante en référence aux dessins annexés, dans lesquels :
- la figure 1 est une vue schématique d'une porte d'inverseur selon l'invention représentée dans ses positions escamotée (en trait continu) et déployée (en trait interrompu) ;
- les figures 2a et 2b sont des vues représentant en détail l'avant de la porte de la figure 1 équipée du mécanisme de commande de volet auxiliaire selon une première forme de réalisation de l'invention, respectivement dans deux positions extrêmes ;
- les figures 3a et 3b sont des schémas représentant une deuxième forme de réalisation du moyen de commande de volet auxiliaire, respectivement dans deux positions extrêmes ;
- la figure 4 représente une première forme de réalisation du système de butée ;
- la figure 5 représente une deuxième forme de réalisation du système de butée ; et
- les figures 6a à 6g représentent une forme de réalisation préférée du système de butée montrant les diverses phases de son fonctionnement.

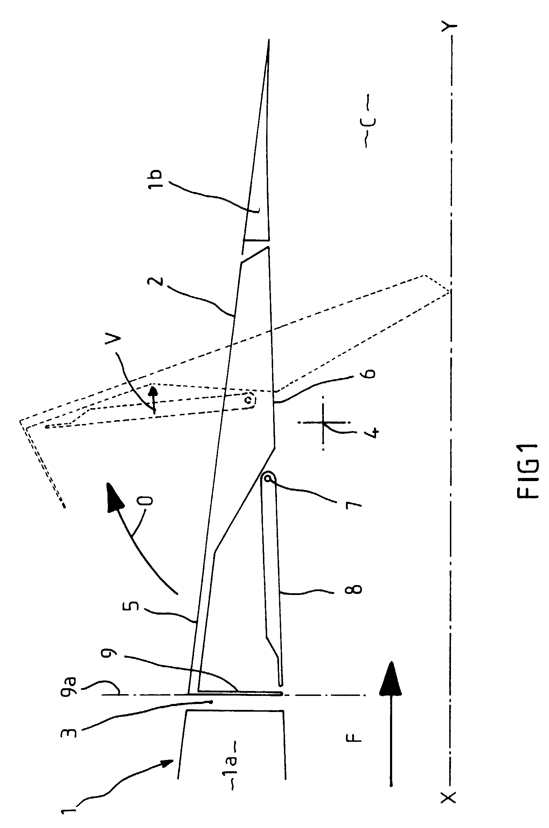

La figure 1 montre schématiquement une porte d'inverseur de poussée équipée d'un volet auxiliaire comme décrit dans FR-A-2 635 825 précité.

On a indiqué en X-Y l'axe du moteur, non représenté, et en 1 le capotage annulaire entourant ce dernier et ménageant avec lui un canal annulaire "C", la flèche F indiquant le sens de circulation du flux de gaz de l'amont (à gauche sur la figure) vers l'aval (à droite sur la figure) du moteur.

Le capotage 1 présente une partie fixe 1a-1b dans laquelle sont ménagées des ouvertures 3 dans lesquelles sont logées les portes d'inverseur 2 distribuées périphériquement.

Chaque porte 2 est articulée, autour d'un axe de pivotement 4, à la structure fixe du capotage de façon à pouvoir évoluer, selon la flèche 0, sous l'action d'un vérin de commande (non représenté) d'une position escamotée ou de croisière, représentée en trait continu à la figure 1, dans laquelle la porte 2 obture l'ouverture 3 et est alignée avec la partie fixe 1a-1b du capotage, afin de permettre au flux des gaz de s'écouler de l'amont vers l'aval, à une position déployée ou d'inversion (représentée en traits interrompus) dans laquelle chaque porte 2, basculant autour de son axe 4, obture au moins partiellement le canal "C" et libère l'ouverture 3 en obligeant le gaz à s'échapper latéralement et vers l'avant, en réalisant ainsi l'effet d'inversion.

Comme on le voit à la figure 1, et comme cela est exposé dans FR-A-2 635 825 précité, la porte 2 comporte une peau ou paroi externe 5 et une peau ou paroi interne 6, la peau externe 5 étant prolongée, côté bord amont 9a de la porte, par un becquet 9 sensiblement perpendiculaire à la peau externe 5. Un volet auxiliaire mobile 8 est articulé autour d'un axe 7 à la peau interne 6, ce volet étant destiné, en position de porte escamotée, à se placer dans le prolongement de la peau interne 6 pour constituer partiellement la cloison extérieure du canal "C", alors qu'en position de porte déployée, ledit volet 8 doit se rabattre dans le sens de la flèche V contre la peau externe 5 de la porte afin de permettre au becquet 9 de jouer son rôle déflecteur.

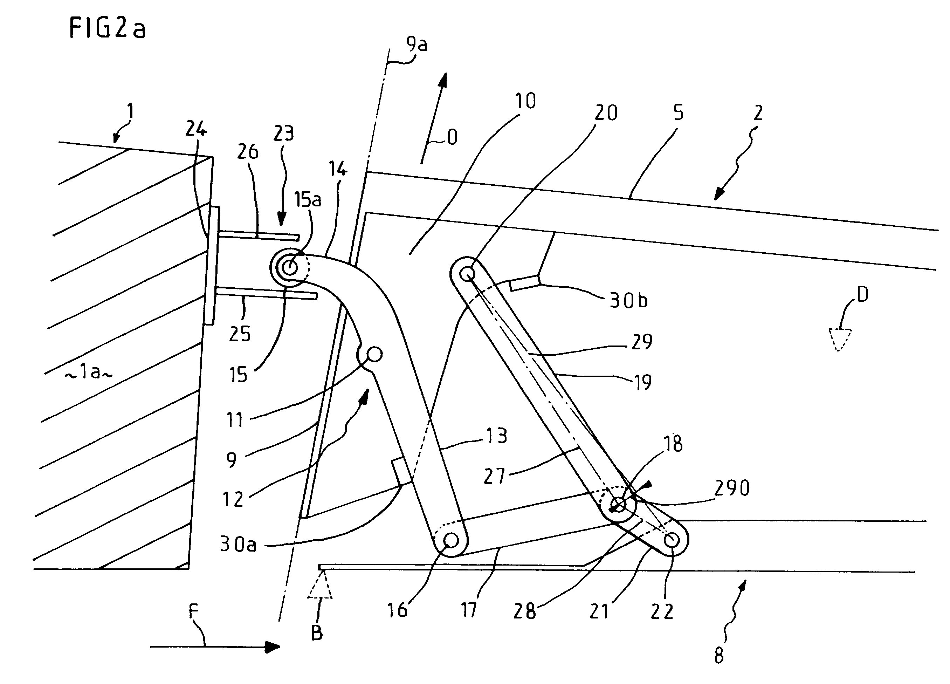

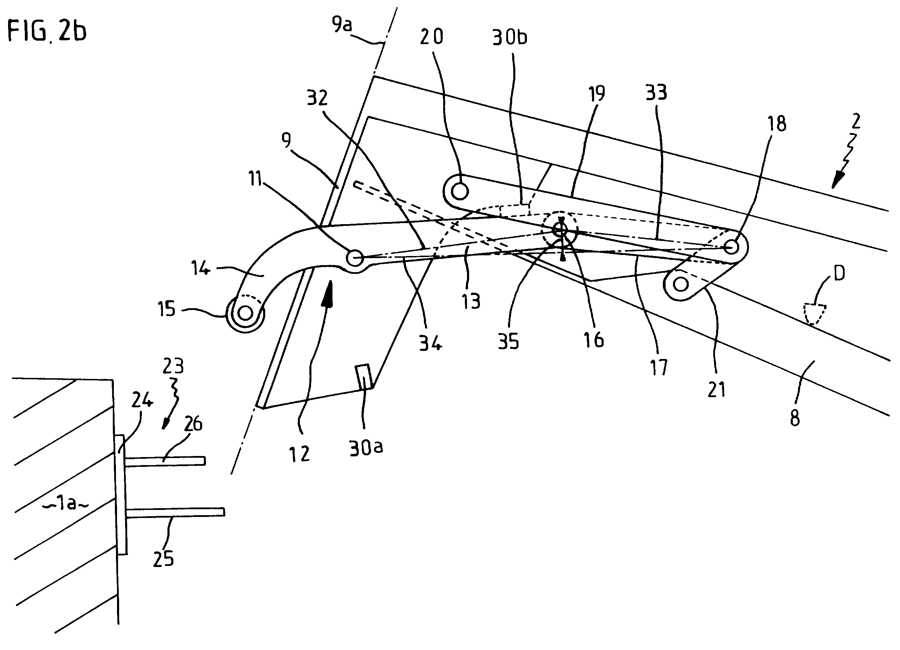

Le déplacement du volet 8 entre ses deux positions est obtenu, selon une première forme de réalisation représentée aux figures 2a et 2b, par des moyens de commande que l'on décrira à présent plus en détail et qui est constitué d'un système de biellettes comprenant une biellette d'actionnement 12, une première biellette 21, une deuxième biellette 19 et une troisième biellette 17.

Plus précisément, dans l'angle interne formé par la peau externe 5 et le becquet 9 de la porte 2 est prévu un gousset 10 dans la partie médiane duquel est ménagé un axe 11 supportant la biellette d'actionnement 12, en forme de L comportant, de part et d'autre de l'axe 11, deux bras 13 et 14, le bras 14 faisant saillie au-delà du becquet 9 (autrement dit au-delà du bord amont 9a de la porte 2) et portant un galet 15 tournant autour d'un axe 15a. L'extrémité du bras 13 porte un axe 16 sur lequel s'articule l'extrémité de la troisième biellette 17 articulée sur un axe 18 reliant, en outre, de façon pivotante, les extrémités de la première et de la deuxième biellettes 19 et 21. La biellette 19 est articulée par son autre extrémité sur un axe 20 solidaire du gousset 10, tandis que la biellette 21 est articulée autour d'un axe 22 solidaire de la partie avant du volet auxiliaire 8. L'axe 20 est situé au-dessus de l'axe 11.

Sur la partie fixe 1a du capotage 1 est fixé par ailleurs un ensemble de butée 23 comportant une semelle ou palette 24 de fixation, une platine inférieure 25 destinée à servir de butée au galet 15 de la biellette 12 et un doigt supérieur ou nez 26 obligeant, lors de l'ouverture de la porte, la biellette 12 à basculer autour de son axe 11 comme on l'expliquera plus en détail ultérieurement.

Comme on le voit à la figure 2a, lorsque la porte 2, sous l'action de son vérin (non représenté), est amenée en position escamotée, le galet 15 de la biellette d'actionnement 12 est maintenu entre les parties 25 et 26 du système de butée 23 et le bras 13 vient en appui contre une butée 30a solidaire du gousset 10. Dans cette position, les axes longitudinaux 27 et 28 des biellettes 19 et 21 forment un angle avec la ligne 29 joignant les axes 20 et 22 desdites biellettes de telle sorte que l'axe 18 est décalé, comme représenté en 290, par rapport à la ligne de point mort que constitue ladite ligne 29. Dans cette situation, le volet 8 est fermement immobilisé en position.

Le volet auxiliaire 8 ne peut être repoussé vers la porte 2 car, pour ce faire, il devrait provoquer le franchissement par l'axe 18 de la ligne de point mort 29, ce qui est interdit par une butée B prévue sur la structure fixe 1 et contre laquelle vient en appui le volet 8.

En revanche, dès que l'on souhaite déployer la porte 2 en position d'inversion, le vérin de porte agit sur celle-ci dans le sens de l'ouverture. Dans ce cas, le galet 15 s'appuie contre le doigt 26 du système de butée 23 tandis que la porte 2 est sollicitée dans le sens de la flèche 0, en entraînant l'axe 11. La biellette 12 pivote donc relativement à la porte 2 et son axe 16 repousse la biellette 17 qui force l'axe 18 à franchir la ligne 29 de point mort. Ce mouvement se poursuit jusqu'à ce que le bras 13 de la biellette 12 vienne en butée contre un appui supérieur 30b du gousset 10 (figure 2b).

Dans cette position, la biellette 19 et la biellette 21 ont rabattu le volet 8 contre la porte 2 en dégageant ainsi le becquet 9, le volet 8 venant au contact d'une butée D solidaire de la porte 2. Le volet 8 est également fermement maintenu dans cette position effacée grâce au fait que l'axe 16 reliant le bras 13 de la biellette 12 et la biellette 17 franchit la ligne de point mort matérialisée par la ligne 34 joignant les axes 11 et 18, l'axe longitudinal 32 du bras 13 de la biellette 12 et l'axe longitudinal 33 de la biellette 17 formant un angle tel que l'axe 16 est décalé par rapport à la ligne de point mort 34 comme le montre l'écart 35. Le franchissement en sens inverse de la ligne de point mort 34 n'est possible que grâce au fait qu'en fin de course de fermeture de la porte, le galet 15 viendra en appui contre le système de butée 23 en obligeant un pivotement en sens horaire de la biellette 12 pour ramener le volet 8 dans la position en trait plein.

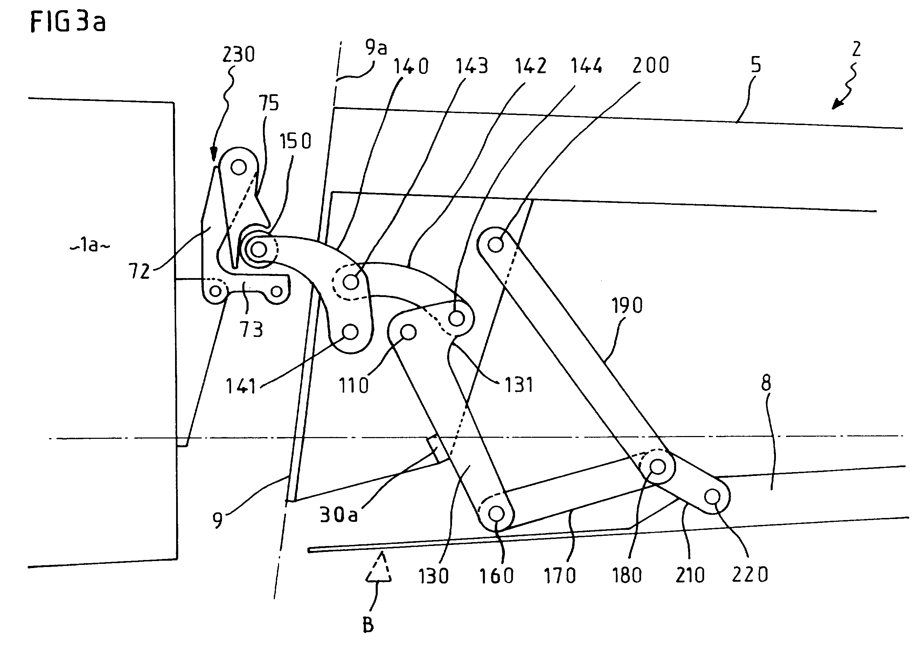

Dans la forme de réalisation des figures 3a-3b, le principe de fonctionnement est le même que celui décrit ci-dessus. La différence intéresse seulement la biellette d'actionnement qui, au lieu d'être monobloc comme représenté aux figures 2a-2b, est constituée de trois éléments 130, 142 et 140. L'élément 130, qui constitue la biellette d'actionnement proprement dite, est articulé, d'une part, autour d'un axe fixe 110 sur le gousset 10 et, d'autre part, autour d'un axe 160, à une biellette 170 articulée elle-même, comme aux figures 2a et 2b, sur un axe 180 commun à deux biellettes 190 et 210. Les biellettes 190 et 210 sont articulées, l'une, autour d'un axe 200 à la partie haute du gousset 10, et l'autre, autour d'un axe 220 à la partie avant du volet auxiliaire 8.

La biellette d'actionnement proprement dite 130 présente un bras 131 sur lequel est articulé, autour d'un axe 144, le deuxième élément 142 précité qui revêt la forme d'un maneton en arc de cercle, articulé à son autre extrémité sur un axe médian 143 du troisième élément 140 précité. Ce troisième élément 140 revêt la forme d'une biellette en L articulée sur un axe fixe 141 du gousset 10 et son extrémité libre est munie d'un galet 150 dépassant à l'extérieur en avant du becquet 9 de porte. La biellette en L 140 forme ainsi un doigt mobile qui coopére avec un système de butée, fixé à la partie fixe la du capotage et que l'on a désigné de façon générale en 230 en n'indiquant que ses éléments principaux, à savoir une palette 72 offrant une platine 73 et un loquet 75. Le maneton 142 forme tringlerie entre la biellette d'actionnement 130 et le doigt mobile 140.

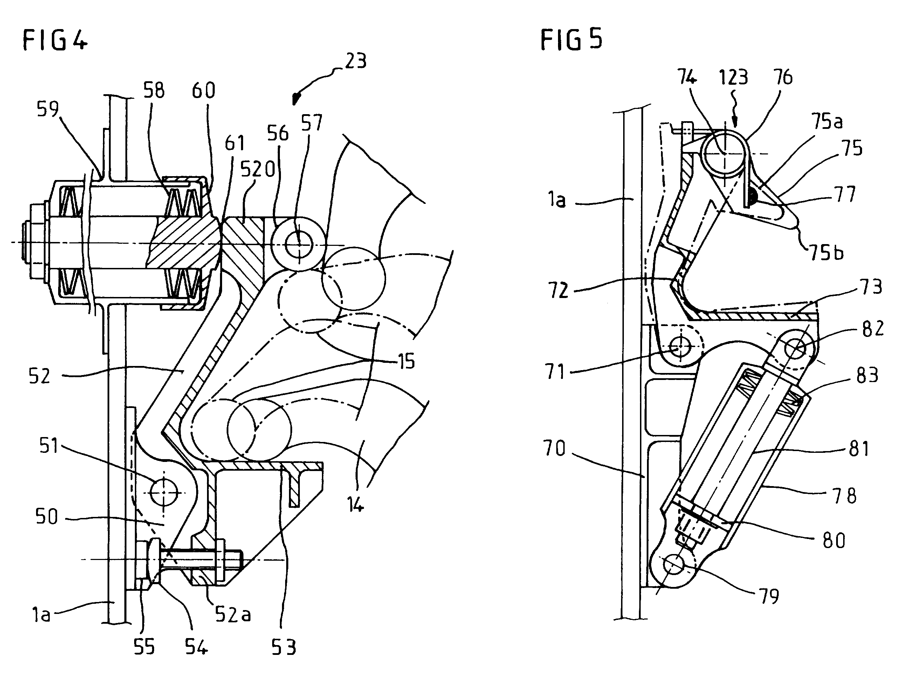

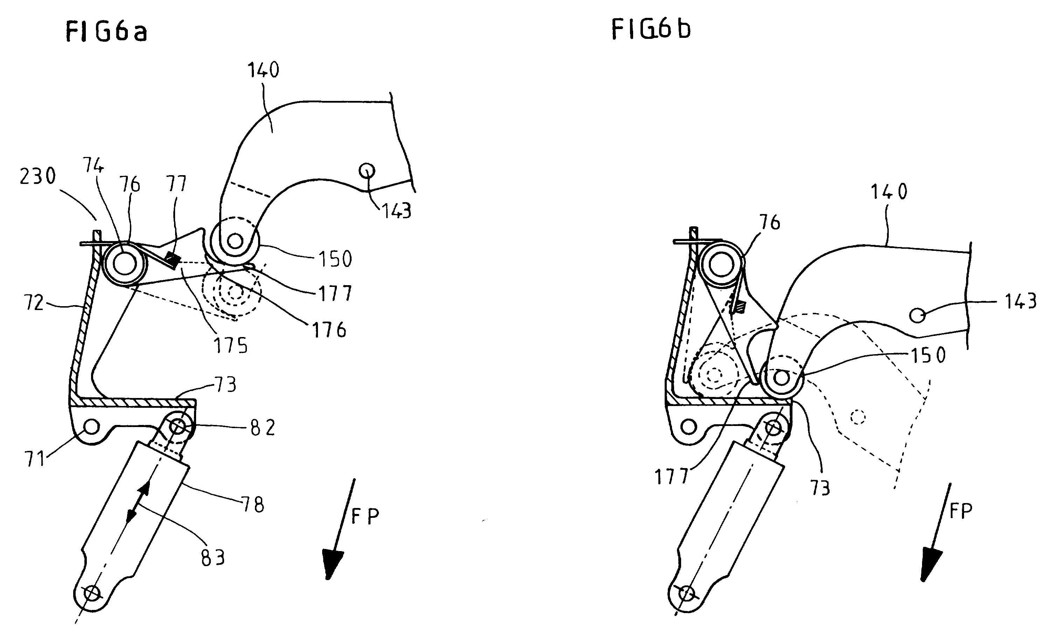

Le système de butée 230 qui sera décrit plus en détail en référence aux figures 6a à 6g, représente la forme préférée de réalisation dont des variantes plus simples sont représentées aux figures 4 et 5.

A la figure 4, le système de butée désigné de façon générale en 23 est constitué par une palette monobloc 52, en forme générale de C, articulée à sa partie inférieure sur un axe 51 porté par un support 50 fixé à la partie fixe la du capotage. La palette 52 présente une platine inférieure 53 destinée à servir d'appui au galet 15 du système de commande de volet. Un boulon 54 de réglage de l'inclinaison de la palette 52 traverse une languette 52a située à la partie inférieure de celle-ci, la tête du boulon de réglage 54 s'appuyant sur une butée 55. Au-dessus de la platine 53, la palette 52 présente un nez 520 terminé par un galet 56 tournant sur un axe 57 et destiné à coopérer avec le galet 15 du système de commande de volet lorsque la porte d'inverseur 2 s'ouvre (comme cela est représenté en trait interrompu), le galet 56 du nez 520 servant alors à provoquer le basculement de la biellette 14 (voir figure 2a). Le nez 520 est sollicité vers la droite de la figure 4 par un mécanisme élastique constitué d'un corps creux 59 fixé sur la partie fixe la et par rapport auquel peut coulisser un piston 60 sollicité par un empilage de rondelles élastiques 58, contre la face arrière 61 du nez 520 de palette. Ce mécanisme élastique permet d'absorber les efforts intempestifs et de tenir compte des jeux de fonctionnement nécessaires, un léger mouvement d'effacement de la palette 52 dans le sens anti-horaire pouvant se produire contre l'action de l'empilage de rondelles élastiques 58.

Dans la forme de réalisation du système de butée 123 représenté à la figure 5, la palette 72 est articulée à sa partie basse autour d'un axe 71 sur un support 70 fixé à la partie fixe la du capotage. Sur la partie haute de la palette 72 est monté, basculant autour d'un axe 74, un loquet de butée 75 sollicité en position de saillie par un ressort spiral 76 enroulé autour de l'axe 74 et agissant sur un ergot 77 du loquet 75.

Ce loquet 75 de forme générale triangulaire a son extrémité 75b arrondie.

Dans cette forme de réalisation également, on a prévu une possibilité de déplacement de la palette 72 autour de l'axe 71 pour répondre à des sollicitations anormales grâce à un organe élastique monté entre un axe 79 du support fixe 70 et un axe 82 situé sous la platine 73 de la palette 72, cet organe élastique comportant un cylindre 78 dans lequel peut coulisser un piston 80-81, un ressort 83 étant interposé entre eux.

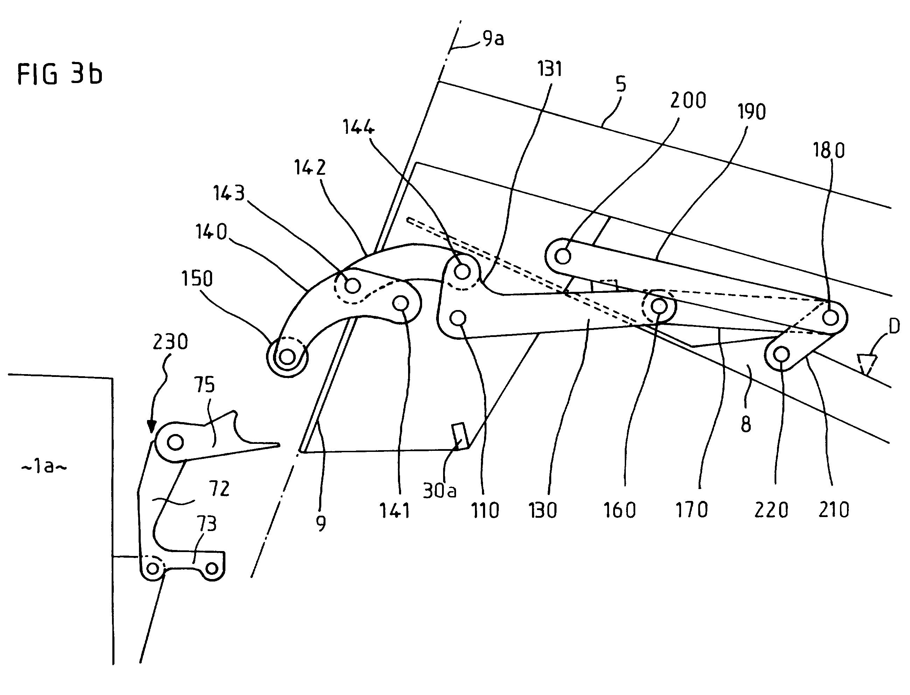

Pour revenir à la forme de réalisation préférée du système de butée selon l'invention, désignée de façon générale en 230 aux figures 3a, 3b et 6a à 6g, on utilise un système similaire à celui de la figure 5 (et on a donc désigné les parties communes par les mêmes chiffres de référence), à la différence du loquet mobile 175 qui a une autre configuration. Ce loquet mobile 175 présente, à son extrémité libre, une partie concave 176 terminée par un doigt d'appui 177, concavité 176 qui est d'un rayon légèrement supérieur à celui du galet 150 avec lequel le loquet 175 doit coopérer.

On décrira succinctement le fonctionnement de la forme d'exécution représentée aux figures 6a à 6g.

La figure 6a montre le système de butée 230 en position d'attente lorsque les portes 2 d'inverseur sont ouvertes.

En fin de fermeture des portes (flèches FP), le galet 150 de la biellette 140 vient prendre appui sur le doigt 177. Le loquet 175 est alors enfoncé vers le bas et bascule autour de l'axe 74 jusqu'à ce que le galet 150 vienne prendre appui contre la platine 73. Dans cette position (figure 6b), le doigt 177 est encore en contact avec le galet 150 contre l'action de son ressort de rappel 76 mais la biellette 140 n'a pas encore basculé. Le mouvement de fermeture de porte se poursuivant alors que le galet 150 est en appui contre la platine 73, la biellette 140 bascule et le galet 150 roule sur la platine 73 jusqu'au fond de celle-ci en repoussant encore le loquet 175 (position en trait interrompu de la figure 6b).

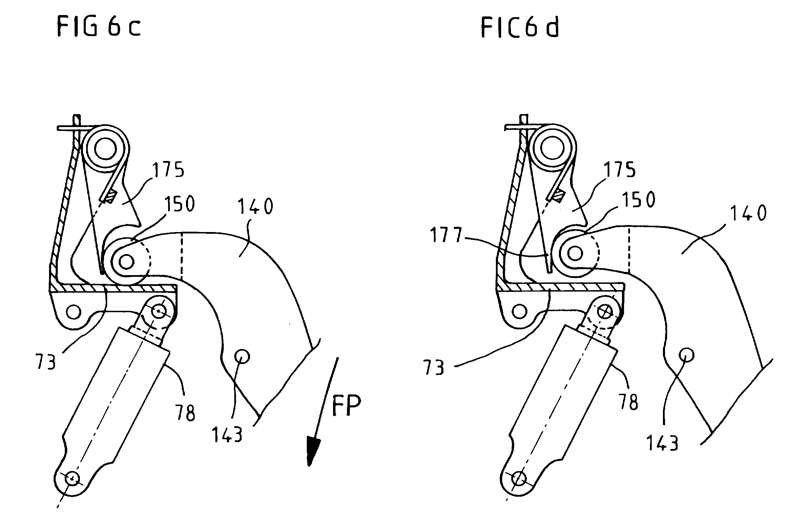

Au moment du passage de la ligne de point mort des biellettes assurant le verrouillage du volet 8 en position de porte escamotée, la position de la biellette 140, du galet 150 et du loquet 175 est celle de la figure 6c et, en état de point mort dépassé, la position est celle de la figure 6d, ce qui correspond à la position en trait plein de la figure 1. Dans ce cas, le galet 150 ne repose plus sur la platine 73 mais contre le doigt 177.

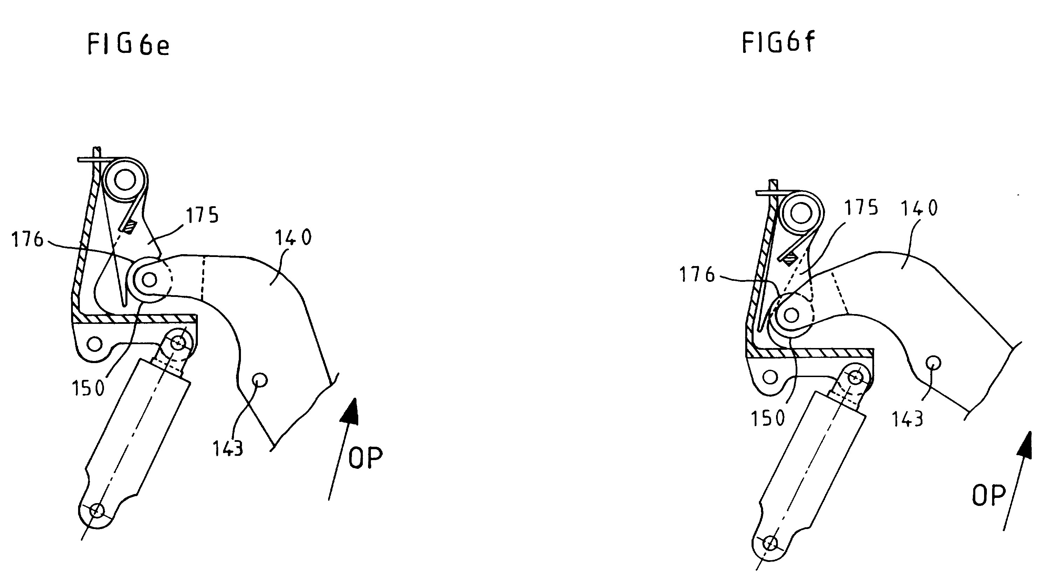

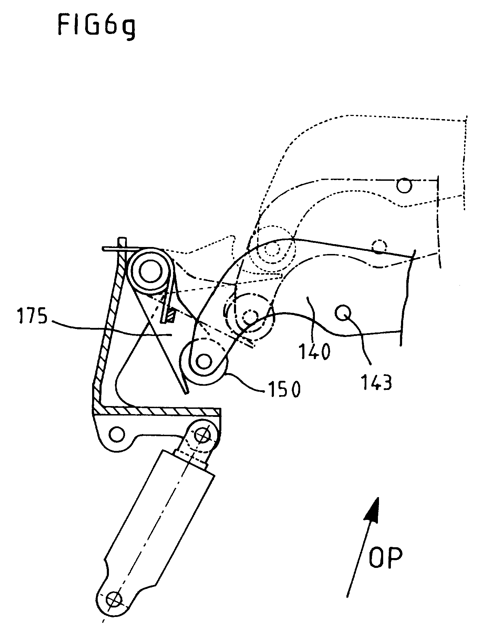

Au début du mouvement d'ouverture de porte (flèche OP -figure 6e-), le galet 150 entre dans la partie concave 176 du loquet dont il provoque le recul (figure 6f) tandis que la biellette 140 commence à basculer. Le mouvement se poursuivant, le galet 150 est retenu par le loquet 175 qui commence à remonter, tandis que la partie arrière de la biellette se relève, ce qui amène le basculement complet de celle-ci (figure 6g). Lorsque l'ensemble atteint à nouveau la position de la figure 6a, le loquet 175 libère complètement le galet 150 de la biellette d'actionnement et la porte 2 s'ouvre totalement.

## Revendications

1. Inverseur de poussée pour moteur d'avion à réaction comportant un capotage (1) entourant le groupe moteur et ménageant avec celui-ci un canal annulaire (C) pour la circulation des gaz, ledit inverseur étant constitué d'une série de portes (2) articulées au capotage de manière à pouvoir évoluer entre une position d'inversion de poussée dans laquelle les portes (2) sont déployées de façon à dégager dans le capotage des ouvertures (3) de dérivation des gaz tout en obturant au moins partiellement le canal annulaire (C), et une position de croisière dans laquelle les portes (2) sont escamotées pour fermer les ouvertures (3) de dérivation et constituer une partie du capotage, lesdites portes (2) étant équipées sur la partie amont de leur face interne, par référence au sens de circulation des gaz, d'au moins un volet (8) auxiliaire articulé à l'intérieur de la porte (2) et destiné, en position de croisière, à être écarté de la paroi interne (6) de la porte (2) pour s'aligner avec la surface externe du canal annulaire (C), alors qu'en position de porte déployée, ledit volet auxiliaire (8) est rabattu contre la paroi interne (6) de la porte (2), le déplacement du volet auxiliaire (8) entre ces deux positions étant réalisé par un moyen de commande du volet (8) constitué par un ensemble de biellettes comprenant une biellette, dite "première biellette", articulée à l'extrémité amont du volet, ledit moyen de commande (8) coopérant, au moment de l'ouverture et de la fermeture de la porte (2) avec un système de butée (23 ; 230) porté par la partie fixe (la) du capotage, ledit inverseur étant **caractérisé** en ce que ladite première biellette (21 ; 210) est attelée par un axe d'articulation (18 ; 180) en bout d'une deuxième biellette (19 ; 190) articulée elle-même à son autre extrémité (20 ; 200) à l'intérieur de l'extrémité amont de la porte (2), une troisième biellette (17 ; 170) s'articulant à l'une de ses extrémités à l'axe d'articulation (18 ; 180) entre les première et seconde biellettes, tandis que son autre extrémité est articulée en bout d'une biellette d'actionnement (12 ; 130, 142, 140) articulée de façon pivotante autour d'un axe fixe (11 ; 110) de la porte, cette biellette d'actionnement (12 ; 130, 142, 140) assurant le déplacement de l'ensemble de biellettes par sa coopération avec le système de butée (23 ; 230) porté par la partie fixe (1a) du capotage, ledit ensemble de biellettes assurant un blocage du volet (8) dans chacune des deux positions qu'il peut prendre, par dépassement, en bout de course, d'un point mort (29, 34) entre deux des biellettes consécutives (19, 21 ; 12, 17) de l'ensemble de biellettes.

2. Inverseur de poussée selon la revendication 1, caractérisé en ce que le dépassement de chacun des points morts (29, 34) entre les deux biellettes consécutives (19, 21 ; 12, 17) de l'ensemble de biellettes est limité par l'appui de la biellette d'actionnement (12) contre des butées (30a, 30b) de limitation de course solidaires de la porte (2).

3. Inverseur de poussée selon la revendication 1 ou 2, caractérisé en ce que le maintien du volet auxiliaire (8) contre la paroi interne (5) de la porte (2), lorsqu'elle est en position déployée, est assuré par le dépassement d'un point mort (34) entre la biellette d'actionnement (12) et ladite troisième biellette (17) articulée à l'extrémité de ladite biellette d'actionnement.

4. Inverseur de poussée selon l'une quelconque des revendications 1 à 3, caractérisé en ce que le maintien du volet auxiliaire (8) dans sa position écartée de la paroi interne (5) de porte (2), lorsque celle-ci est en position escamotée, est assuré par le dépassement d'un point mort (29) entre lesdites première et deuxième biellettes (19, 21) articulées, pour l'une, à l'extrémité amont de la porte (2) et, pour l'autre, au volet auxiliaire (8).

5. Inverseur de poussée selon l'une quelconque des revendications 1 à 4, caractérisé en ce que la biellette d'actionnement (12 ; 130, 142, 140) comprend, de part et d'autre de son axe d'articulation (11 ; 110) à la porte, un premier bras (13 ; 130) articulé à ladite troisième biellette (17 ; 170) du jeu de biellettes et un second bras (14 ; 140) faisant saillie par rapport au bord amont (9a) de la porte (2) et destiné à coopérer avec ledit système de butée (23 ; 230).

6. Inverseur de poussée selon l'une quelconque des revendications 1 à 4, caractérisé en ce que la biellette d'actionnement (130), articulée sur ledit axe fixe (110) de la porte, présente un bras (131) attelé par une tringlerie (142) à un doigt mobile (140) articulé sur un axe fixe (141) de la porte et ayant une extrémité libre faisant saillie par rapport au bord amont (9a) de la porte (2) pour coopérer avec ledit système de butée (230), ladite tringlerie (142) étant, d'une part, articulée de façon pivotante sur ledit bras (131) de la biellette d'actionnement (130) et, d'autre part, articulée de façon pivotante au doigt mobile (140) en un point situé entre l'axe fixe (141) de pivotement du doigt (140) et l'extrémité libre en saillie de celui-ci, ladite tringlerie (142) transmettant le mouvement du doigt (140) à la biellette d'actionnement (130).

7. Inverseur de poussée selon l'une quelconque des revendications 1 à 6, caractérisé en ce que le système de butée (23 ; 230) porté par la partie fixe (1a) du capotage et avec lequel coopère le moyen de commande du volet auxiliaire (8) comporte une palette (24 ; 52 ; 72) dont une partie (25 ; 53 ; 73) s'étend en direction de la porte (2) pour servir de butée d'arrêt à la partie (15 ; 150) du moyen de commande du volet faisant saillie par rapport au bord amont (9a) de la porte, ladite palette (24 ; 52 ; 72) présentant au-dessus de sa partie (25 ; 53 ; 73) formant Dutée, un nez (26 ; 75 ; 520) en saillie agissant lors de l'ouverture de porte sur la biellette d'actionnement (12 ; 130) du volet (8) pour l'obliger à basculer.

8. Inverseur de poussée selon la revendication 7, caractérisé en ce que le nez en saillie (26 ; 520) est fixe par rapport à la palette (24 ; 52).

9. Inverseur de poussée selon la revendication 7, caractérisé en ce que le nez en saillie est constitué par un loquet (75 ; 175) monté basculant sur un axe (74) de la palette (72) et sollicité par un ressort (76) en position sortie au-dessus de la partie (73) formant butée de la palette (72).

10. Inverseur de poussée selon la revendication 9, caractérisé en ce que l'extrémité libre du loquet (175) a une forme concave (176) terminée par un doigt d'appui (177), cette extrémité libre du loquet coopérant et restant en contact avec l'extrémité (150) de la partie faisant saillie du moyen (140) de commande du volet pendant l'ensemble des manoeuvres de début d'ouverture et de fin de fermeture de la porte (2).

11. Inverseur de poussée selon l'une quelconque des revendications 7 à 10, caractérisé en ce que la palette (52 ; 72) est montée sur la partie fixe (1a) du capotage par l'intermédiaire d'un organe amortisseur élastique (58 ; 83) permettant un léger débattement de la palette.

## Patentansprüche

1. Schubumkehrvorrichtung für ein Flugzeugstrahltriebwerk mit einer Verkleidung (1), die das Triebwerk umgibt und mit diesem einen ringförmigen Kanal (C) für die Zirkulation der Gase bildet, wobei diese Schubumkehrvorrichtung aus einer Reihe von Türen (2) besteht, die an der Verkleidung so angelenkt sind, daß sie sich zwischen einer Schubumkehrstellung, in der die Türen (2) so ausgeklappt sind, daß sie in der Verkleidung Öffnungen (3) zur Ablenkung der Gase freilegen, wobei sie gleichzeitig mindestens teilweise den ringförmigen Kanal (C) verschließen, und einer Flugstellung bewegen können, in der die Türen (2) eingeschwenkt sind, um die Ablenköffnungen (3) zu schließen und einen Teil der Verkleidung zu bilden, wobei diese Türen (2) auf dem bezüglich der Strömungsrichtung der Gase eingangsseitigen Teil ihrer Innenfläche mit mindestens einer Hilfsklappe (8) ausgerüstet sind, die im Inneren der Tür (2) angelenkt ist und dazu bestimmt ist, in Flugstellung von der Innenwand (6) der Tür (2) entfernt zu sein, um mit der Außenfläche des ringförmigen Kanals (C) bündig zu sein, während diese Hilfsklappe (8) in der ausgeklappten Türstellung an die Innenwand (6) der Tür (2) herangeklappt ist, wobei die Bewegung der Hilfsklappe (8) zwischen diesen beiden Stellungen durch eine Antriebseinrichtung der Klappe (8) bewirkt wird, die aus einem Satz von Schwingarmen besteht, der einen Schwingarm, "erster Schwingarm" genannt, aufweiset, der am eingangsseitigen Ende der Klappe angelenkt ist, wobei diese Antriebseinrichtung zum Zeitpunkt der Öffnung und der Schließung der Tür (2) mit einem vom feststehenden Teil (la) der Verkleidung getragenen Anschlagsystem (23; 230) zusammenwirkt, dadurch gekennzeichnet, daß der erste Schwingarm (21; 210) durch eine Gelenkachse (18; 180) am Ende eines zweiten Schwingarms (19; 190) angekoppelt ist, der selbst an seinem anderen Ende (20; 200) im Inneren des eingangsseitigen Endes der Tür (2) angelenkt ist, wobei ein dritter Schwingarm (17; 170) an einem seiner Enden an der Gelenkachse (18; 180) zwischen dem ersten und dem zweiten Schwingarm angelenkt ist, während sein anderes Ende am Ende eines Antriebsschwingarms (12; 130, 142, 140) angelenkt ist, der schwenkbar an einer feststehenden Achse (11; 110) der Tür angelenkt ist und der die Bewegung des Schwingarmesatzes durch sein Zusammenwirken mit dem vom feststehenden Teil (1a) der Verkleidung getragenen Anschlagsystem (23; 230) gewährleistet, wobei dieser Schwingarmesatz eine Blokkierung der Klappe (8) in jeder der beiden Stellungen, die sie einnehmen kann, gewährleistet, indem am Ende der Bewegung ein Totpunkt (29, 34) zwischen zwei der aufeinanderfolgenden Schwingarmen (19, 21; 12, 17) des Schwingarmesatzes überschritten wird.

2. Schubumkehrvorrichtung nach Anspruch 1, dadurch gekennzeichnet, daß das Überschreiten jedes der Totpunkte (29, 34) zwischen den beiden aufeinanderfolgenden Schwingarmen (19, 21; 12, 17) des Schwingarmesatzes durch die Abstützung des Antriebsschwingarms (12) an mit der Tür (2) fest verbundenen Anschlägen (30a, 30b) zur Begrenzung der Bewegung begrenzt ist.

3. Schubumkehrvorrichtung nach Anspruch 1 oder 2, dadurch gekennzeichnet, daß der Halt der Hilfsklappe (8) an der Innenwand (5) der Tür (2), wenn diese in ausgeklappter Stellung ist, durch das Überschreiten eines Totpunkts (34) zwischen dem Antriebsschwingarm (12) und dem dritten Schwingarm (17) gewährleistet wird, der am Ende des Antriebsschwingarms angelenkt ist.

4. Schubumkehrvorrichtung nach einem der Ansprüche 1 bis 3, dadurch gekennzeichnet, daß der Halt der Hilfsklappe (8) in seiner von der Innenwand (5) der Tür (2) entfernten Stellung, wenn diese in der eingeschwenkten Stellung ist, durch das Überschreiben eines Totpunkts (29) zwischen dem ersten und dem zweiten Schwingarm (19, 21) gewährleistet wird, deren einer am eingangsseitig Ende der Tür (2) und deren anderer an der Hilfsklappe (8) angelenkt ist.

5. Schubumkehrvorrichtung nach einem der Ansprüche 1 bis 4, dadurch gekennzeichnet, daß der Antriebsschwingarm (12; 130, 142, 140) zu beiden Seiten seiner Achse (11; 110) zur Anlenkung an der Tür einen ersten Arm (13; 130), der am dritten Schwingarm (17; 170) des Schwingarmesatzes angelenkt ist, und einen zweiten Arm (14; 140) aufweist, der an der eingangsseitigen Kante (9a) der Tür (2) vorsteht und dazu bestimmt ist, mit dem Anschlagsystem (23; 230) zusammenzuwirken.

6. Schubumkehrvorrichtung nach einem der Ansprüche 1 bis 4, dadurch gekennzeichnet, daß der an der feststehenden Achse (110) der Tür angelenkte Antriebsschwingarm (130) einen Arm (131) aufweist, der durch eine Stange (142) mit einem beweglichen Finger (140) gekoppelt ist, der an einer feststehenden Achse (141) der Tür angelenkt ist und ein freies Ende besitzt, das bezüglich der eingangsseitigen Kante (9a) der Tür (2) vorsteht, um mit dem Anschlagsystem (230) zusammenzuwirken, wobei die Stange (142) einerseits schwenkbar an dem Arm (131) des Antriebsschwingarms (130) angelenkt ist und andererseits schwenkbar am beweglichen Finger (140) an einem Punkt angelenkt ist, der zwischen der feststehenden Schwenkachse (141) des Fingers (140) und dessen freiem vorstehenden Ende gelegen ist, wobei die Stange (142) die Bewegung des Fingers (140) auf den Antriebsschwingarm (130) überträgt.

7. Schubumkehrvorrichtung nach einem der Ansprüche 1 bis 6, dadurch gekennzeichnet, daß das vom feststehenden Teil (1a) der Verkleidung getragene Anschlagsystem (23; 230), mit dem die Antriebseinrichtung der Hilfsklappe (8) zusammenwirkt, eine Gabel (24; 52; 72) aufweist, von der ein Teil (25; 53; 73) sich in Richtung auf die Tür (2) erstreckte, um als Sperranschlag für den Teil (15; 150) der Antriebseinrichtung der Klappe zu dienen, der bezüglich der eingangsseitigen Kante (9a) der Tür vorsteht, wobei diese Gabel (24; 52; 72) oberhalb ihres einen Anschlag bildenden Teils (25; 53; 73) eine vorstehende Nase (26; 75; 520) aufweist, die bei der Öffnung der Tür auf den Antriebsschwingarm (12; 130) der Klappe (8) einwirkt, um sie dazu zu zwingen zu verschwenkten.

8. Schubumkehrvorrichtung nach Anspruch 7, dadurch gekennzeichnet, daß die vorstehende Nase (26; 520) bezüglich der Gabel (24; 52) feststehend ist.

9. Schubumkehrvorrichtung nach Anspruch 7, dadurch gekennzeichnet, daß die vorstehende Nase aus einer Klinke (75; 175) besteht, die auf einer Achse (74) der Gabel (72) verschwenkbar montiert ist und durch eine Feder (76) in die ausgeklappte Stellung über dem den Anschlag bildenden Teil (73) der Gabel (72) beaufschlagt wird.

10. Schubumkehrvorrichtung nach Anspruch 9, dadurch gekennzeichnet, daß das freie Ende der Klinke (175) eine konkave Form (176) hat, an deren Ende ein Stützfinger (177) vorgesehen ist, wobei dieses freie Ende der Klinke mit dem Ende (150) des vorstehenden Teils der Antriebseinrichtung (140) der Klappe während aller Betätigungen des Öffnungsbeginns und der Beendigung der Schließung der Tür (2) zusammenwirkt und in Kontakt bleibt.

11. Schubumkehrvorrichtung nach einem der Ansprüche 7 bis 10, dadurch gekennzeichnet, daß die Gabel (52; 72) an dem feststehenden Teil (1a) der Verkleidung über ein elastisches Dämpfungsorgan (58; 83) montiert ist, das einen leichten Ausschlag der Gabel gestattet.

## Claims

1. A thrust reverser for a jet aircraft engine including a fairing (1) surrounding the engine unit and together with the latter forming an annular duct (C) for the flow of the gases, said reverser being made up of a series of doors (2) which are articulated to the fairing so that they can move between a thrust-reversal position in which the doors (2) are deployed so as to free, in the fairing, openings (3) for diverting the gases while at least partially closing off the annular duct (C), and a cruise position in which the doors (2) are stowed so as to close the diversion openings (3) and constitute part of the fairing, said doors (2) being equipped on the upstream part of their internal face, with reference to the direction of flow of the gases, with at least one auxiliary flap (8) articulated to the inside of the door (2) and intended, in the cruise position, to be moved away from the internal wall (6) of the door (2) in order to align itself with the external surface of the annular duct (C), while in the door-deployed position, said auxiliary flap (8) is folded back against the internal wall (6) of the door (2), the displacement of the auxiliary flap (8) between these two positions being achieved by a means for controlling the flap (8) which is made up by a set of link rods comprising a so-called "first link rod" which is articulated to the upstream end of the flap, said control means (8) interacting, at the moment of opening and closing the door (2), with a stop piece system (23 ; 230) carried by the stationary part (1a) of the fairing, said reverser being characterized in that said first link rod (21 ; 210) is attached by an articulation pin (18 ; 180) at the end of a second link rod (19 ; 190) itself articulated at its other end (20 ; 200) to the inside of the upstream end of the door (2), a third link rod (17 ; 170) being articulated at one of its ends to the articulation pin (18 ; 180) between the first and second link rods, while its other end is articulated at the end of an actuating link rod (12 ; 130,142,140) which is articulated so that it can pivot about a fixed pin (11 ; 110) of the door, this actuating link rod (12 ; 130,142,140) providing the displacement of the set of link rods by its interaction with the stop piece system (23 ; 230) carried by the stationary part (1a) of the fairing, said set of link rods providing an immobilization of the flap (8) in each of the two positions which it can assume, by extending, at the end of travel, beyond a neutral point (29,34) between two of the consecutive link rods (19,21 ; 12,17) of the set of link rods.

2. The thrust reverser as claimed in claim 1, characterized in that the amount by which each of the neutral points (29,34) between the two consecutive link rods (19,21 ; 12,17) of the set of link rods can be exceeded is limited by the actuating link rod (12) bearing against travel-limiting stops (3a,3b) integral with the door (2).

3. The thrust reverser as claimed in claim 1 or 2, characterized in that the auxiliary flap (8) is held against the internal wall (5) of the door (2), when the door is in the deployed position, by the exceeding of a neutral point (34) between the actuating link rod (12) and said third link rod (17) articulated to the end of said actuating link rod.

4. The thrust reverser as claimed in any of claims 1 to 3, characterized in that the auxiliary flap (8) is held in its position away from the internal wall (5) of the door (2) when the latter is in the stowed position by the exceeding of a neutral point (29) between said first and second link rods (19,21) which are articulated, in the case of one of them, to the upstream end of the door (2) and, in the case of the other, to the auxiliary flap (8).

5. The thrust reverser as claimed in any of claims 1 to 4, characterized in that the actuating link rod (12 ; 130,142,140) comprises, on either side of the pin (11 ; 110) via which it is articulated to the door, a first arm (12 ; 130) which is articulated to said third link rod (17 ; 170) of the set of link rods and a second arm (14 ; 140) which projects with respect to the upstream edge (9a) of the door (2) and is intended to interact with said stop piece system (23 ; 230).

6. The thrust reverser as claimed in any of claims 1 to 4, characterized in that the actuating link rod (130) articulated to said stationary pin (110) of the door, exhibits an arm (131) attached by a linkage (142) to a moving finger (140) which is articulated to a stationary pin (141) of the door and has one free end projecting with respect to the upstream edge (9a) of the door (2) to interact with said stop piece system (230), said linkage (142) being, on the one hand, articulated so that it can pivot on said arm (131) of the actuating link rod (130) and, on the other hand, articulated so that it can pivot to the moving finger (140) at a point situated between the stationary pivot pin (141) of the finger (140) and the projecting free end of the latter, said linkage (142) transmitting the movement from the finger (140) to the actuating link rod (130).

7. The thrust reverser as claimed in any of claims 1 to 6, characterized in that the stop piece system (23 ; 230) carried by the stationary part (1a) of the fairing and with which the means for controlling the auxiliary flap (8)interacts includes a bracket (24 ; 52 ; 72), part (25 ; 53 ; 73) of which extends in the direction of the door (2) to act as an arrester stop piece for the part (50 ; 150) of the means for controlling the flap which projects with respect to the upstream edge (9a) of the door, said bracket (24 ; 52 ; 72) exhibiting, above its part (25 ; 53 ; 73) forming a stop piece, a projecting snout (26 ; 75 ; 520) which, when the door is being opened, acts on the actuating link rod (12 ; 130) of the flap (8) to force it to tilt.

8. The thrust reverser as claimed in claim 7, characterized in that the projecting snout (26 ; 520) is stationary with respect to the bracket (24 ; 52).

9. The thrust reverser as claimed in claim 7, characterized in that the projecting snout is made up by a latch (75 ; 175) mounted so that it can tilt on a pin (74) of the bracket (72) and urged by a spring (76) into the out position above the part (73) of the bracket (72) forming a stop piece.

10. The thrust reverser as claimed in claim 9, characterized in that the free end of the latch (175) has a concave shape (176) ending in a bearing finger (177), this free end of the latch interacting and remaining in contact with the end (150) of the projecting part of the means (140) for controlling the flap during all of the manoeuvres at the beginning of opening and end of closing the door (2).

11. The thrust reverser as claimed in any of claims 7 to 10, characterized in that the bracket (52 ; 72) is mounted on the stationary part (1a) of the fairing by means of an elastic damper member (58 ; 83) allowing a slight excursion of the bracket.
